# EUROPEAN PATENT SPECIFICATION

(11) **EP 2 469 781 B1**
(45) Date of publication and mention of the grant of the patent: **19.03.2014**
(21) Application number: 10196629.9
(22) Date of filing: 22.12.2010
(51) Int. Cl.: H04L 12/58, H04W 4/02, H04L 29/08

(54) **Facilitating ad hoc congregation over an instant messaging network**
Ermöglichung der Ad Hoc-Kongregation über ein Sofortnachrichten-Netzwerk
Facilitation de la congrégation ad hoc dans un réseau de messagerie instantanée

(43) Date of publication of application: 27.06.2012
(73) Proprietor: BlackBerry Limited, Waterloo, ON N2K 0A7 (CA)
(72) Inventor: Chen, Henry Yao-Tsu, Waterloo Ontario N2L 3L3 (CA); Ganeshalingam, Theban, Mississauga Ontario L4W 0B4 (CA)
(74) Representative: Patel, Binesh

(56) References cited:
- EP-A1- 1 773 074
- WO-A1-00/22860
- WO-A1-02/071365
- WO-A2-02/48836
- US-A1- 2003 101 225

## Description

### TECHNICAL FIELD

The present disclosure relates to instant messaging and in particular to location related messaging between wireless mobile devices.

### BACKGROUND

Instant messaging applications have provided the ability for communication between two or more users quickly between electronic devices. The use of instant messaging applications on wireless mobile devices, such as for example Blackberry Messenger™, has enabled users to connect and stay in contact with groups of people via deliver text, audio and video based messages no matter where they are. The inclusion of location identification capabilities in wireless mobile devices, using technologies such as Global Positioning System (GPS), have enabled information to be delivered to the devices based upon their location. Wireless mobile devices can determine their location with considerable accuracy but have primarily been limited to mapping and navigation applications. The advent of instant messaging and social networking applications have spawned an increased desire to be aware of the activities and locations of friends.

Accordingly, systems and methods that enable ad hoc congregation by using an instant messaging network between wireless mobile devices remain highly desirable.

EP 1 773 074 A1 discloses a method of operating a mobile telecommunication system. Information relating to a current location of a first user is transmitted to a second user. A location of the first user is associated to a corresponding location identity which is automatically identifiable. The location identity is automatically identified and used as the current location of the first user if the first user has moved to the corresponding location.

WO 00/22860 relates to a method and a system for transmitting data between communication units. In particular, this document relates to a method and a system for use in wireless communication networks. Even more particularly, this document relates to a method and a system for automatic notification of a user "A" of the entry of pre-selected user "B" into a pre-determined area (or proximity to a particular location). The notification may further depend on a successful match of user specified parameters. The location of users "A" and "B" is determined by reference to the position of their personal wireless communication unit, such as a mobile telephone or a pager.

WO 02/071365 A1 discloses a group notification system and associated method that allow particular activities to be executed based on the group dynamics, such as the dynamics of organizing meetings. The system facilitates the availability of knowledge concerning the proximity and direction of movement of individuals, objects, or groups, and whether this information satisfies preset criteria or rules. One such criterion is that the proximity distance of the group members be less than a predetermined threshold range. The threshold range can be adjustable or programmable.

US 2003/0101225 A1 discloses a method, system, and computer program product for providing event service based on locations of mobile users provides improved efficiency by using a location cache to store recent location information for mobile users, reducing the need for expensive and time consuming positioning requests, and by intelligently scheduling times when location determinations are to be made. The method comprises the steps of: a) obtaining information indicating a current location of at least one mobile user, the at least one mobile user including a selected mobile user, b) determining if at least one condition relating to a location of at least one mobile user is satisfied based on the indicated current location of the at least one mobile user, c) performing at least one event, if at least one condition is satisfied, and d) determining a time interval to wait before repeating steps a)-c).

### BRIEF DESCRIPTION OF THE DRAWINGS

Further features and advantages of the present disclosure will become apparent from the following detailed description, taken in combination with the appended drawings, in which:
Figure 1 shows a schematic representation of wireless mobile device;
Figure 2 shows a schematic representation of a wireless instant messaging system;
Figure 3 shows an example device screen providing an instant messaging application;
Figure 4 shows an example device screen providing an instant messaging application identifying shared meet-up locations;
Figure 5 shows an example device screen providing an instant messaging application identifying check-in status at a shared meet-up location;
Figure 6 shows an example device screen providing an instant messaging application identifying a shared meet-up location map;
Figure 7 shows an alternative example device screen providing an instant messaging application identifying shared meet-up locations;
Figure 8a & 8b show a flow diagrams illustrating a shared meet-up location check-in on a wireless mobile device;
Figure 9 shows a flow diagram illustrating a shared meet-up location check-in on an instant messaging server;
Figure 10 shows a flow diagram illustrating an alternative shared meet-up location check-in on an instant messaging server;
Figure 11 shows a flow diagram illustrating a shared meet-up notification being received by a member wireless mobile device;
Figure 12 shows a flow diagram illustrating a shared meet-up location request generation on a wireless mobile device;
Figure 13 shows a flow diagram illustrating a shared meet-up location request acceptance on a wireless mobile device; and
Figure 14 shows a flow diagram illustrating a shared meet-up location request processing on an instant messaging server.

It will be noted that throughout the appended drawings, like features are identified by like reference numerals.

### SUMMARY

In one aspect, the present disclosure provides a method of facilitating ad-hoc congregation using an application executed by a processor on a wireless mobile device. The method comprises the steps recited in claim 1.

In another aspect, the present disclosure provides a wireless mobile device as recited in claim 13.

In yet another aspect, the present disclosure provides a computer readable media storing instructions for execution by a processor as recited in claim 14.

Other aspects of the present disclosure will be apparent to those of ordinary skill in the art from a review of the following detailed description in conjunction with the drawings. Embodiments of the present disclosure are not limited to any particular operating system, mobile device architecture, server architecture, or computer programming language.

### DETAILED DESCRIPTION

The details and particulars of these aspects of the technology will now be described below, by way of example, with reference to the attached drawings.

This disclosure seeks to facilitate physical interactions among a collection of people who normally have sites of congregation such as the shopping mall, grocery store, coffee shop, neighbourhood playground. Occasionally, meet-ups at these sites are arranged. On other occasions, arrival at the site is unplanned. The term instant messaging is used in the disclosure and also includes a peer-to-peer messaging system. Instant messaging includes any type of real-time or near real-time communication applications utilizing direct communication between devices or utilizing one or more servers for facilitating communication. The disclosed technology enables congregation at designated sites in an ad-hoc manner based upon instant messaging communications. A group defining multiple members (or users), such as those defined in instant messaging applications, can designate meet-up sites defined by a geographic location. When members arrive at a designated meet-up site, this information can be shared with the members of the group enabling members to know who is at the designed meet-up site. Users can adjust their schedules and congregate there as well, knowing that this group desires social contact at the designated location.

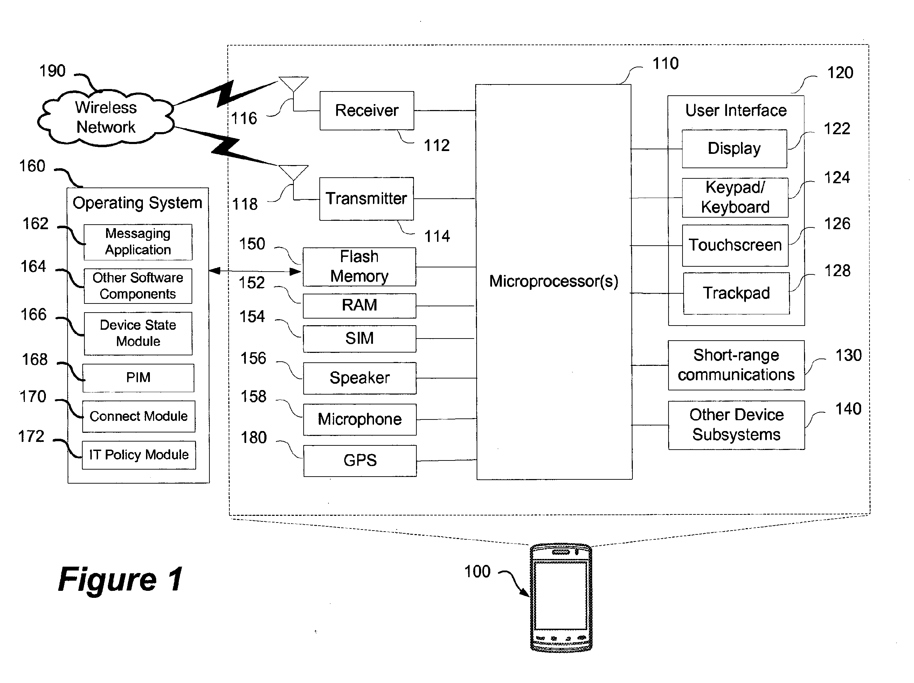

Figure 1 is a schematic depiction of a wireless communications device as one example of a wireless mobile device on which the present technology may be implemented. As shown by way of example in Figure 1, the wireless mobile device, which is designated generally by reference numeral 100, includes a processor (or microprocessor) 110 for executing one or more applications, memory in the form of flash memory 120 and/or Flash memory 150 and RAM 152 (or any equivalent memory devices) for storing the one or more applications and related data, and a user interface 120 with which the user interacts with the device. The user interface 140 may include a display 122 and an alphanumeric keypad/keyboard 124 and/or touch screen 126. The device may include a trackball, thumbwheel or trackpad 128 for cursor movement and navigation.

As shown by way of example in Figure 1, the wireless mobile device 100 includes a radiofrequency (RF) transceiver comprising a receiver 122 and associated receiver antenna 166 and transmitter 144 and associated transmitter antenna 118. The RF transceiver for communication with a wireless network 190 using a wireless communication protocols such as, for example but not limited to, GSM, UMTS, LTE, HSPDA, CDMA, W-CDMA, Wi-MAX, etc. A subscriber identify module (SIM) card 154 may be provided. Optionally, where the device is a voice-enabled wireless communications device such as, for example, a smartphone or cell phone, the device would further include a microphone 158 and a speaker 156. Short-range communications is provided through wireless technologies such as Bluetooth™ or wired Universal Serial Bus™ connections to other peripheries or computing devices or by other device sub-systems 140. This device may optionally include a Global Positioning System (GPS) receiver chipset 180 or other location-determining subsystem.

Although the present disclosure refers to expressly to the "Global Positioning System", it should be understood that this term and its abbreviation "GPS" are being used expansively to include any satellite-based navigation-signal broadcast system, and would therefore include other systems used around the world including the Beidou (COMPASS) system being developed by China, the multinational Galileo system being developed by the European Union, in collaboration with China, Israel, India, Morocco, Saudi Arabia and South Korea, Russia's GLONASS system, India's proposed Regional Navigational Satellite System (IRNSS), and Japan's proposed QZSS regional system.

Another sort of position-determining subsystem may be used as well, e.g. a radiolocation subsystem that determines its current location using radiolocation techniques, as will be elaborated below. In other words, the location of the device can be determined using triangulation of signals from in-range base towers, such as used for Wireless E911. Wireless Enhanced 911 services enable a wireless mobile device or other wireless device to be located geographically using radiolocation techniques such as (i) angle of arrival (AOA) which entails locating the caller at the point where signals from two towers intersect; (ii) time difference of arrival (TDOA), which uses multilateration like GPS, except that the networks determine the time difference and therefore the distance from each tower; and (iii) location signature, which uses "fingerprinting" to store and recall patterns (such as multipath) which mobile phone signals exhibit at different locations in each cell. Radiolocation techniques may also be used in conjunction with GPS in a hybrid positioning system. References herein to "GPS" are meant to include Assisted GPS and Aided GPS.

The mobile device 100 also includes an operating system 160 and software components 162 to 172 which are described in more detail below. The operating system 160 and the software components 162 to 172 that are executed by the main processor 110 are typically stored in a persistent store such as the flash memory 150, which may alternatively be a read-only memory (ROM) or similar storage element (not shown). Those skilled in the art will appreciate that portions of the operating system 160 and the software components 162 to 172, such as specific device applications, or parts thereof, may be temporarily loaded into a volatile store such as the RAM 152. Other software components can also be included, as is well known to those skilled in the art.

The subset of software applications that control basic device operations, including data and voice communication applications, may be installed on the mobile device 100 during its manufacture. Other software applications include a message application 162 that can be any suitable software program that allows a user of the mobile device 100 to send and receive electronic messages. Various alternatives exist for the message application 162 as is well known to those skilled in the art. Messages that have been sent or received by the user are typically stored in the flash memory 150 of the mobile device 100 or some other suitable storage element in the mobile device 100. In at least some embodiments, some of the sent and received messages may be stored remotely from the device 100 such as in a data store of an associated host system that the mobile device 100 communicates with.

The software applications can further comprise a device state module 166, a Personal Information Manager (PIM) 168, and other suitable modules (not shown). The device state module 166 provides persistence, i.e. the device state module 166 ensures that important device data is stored in persistent memory, such as the flash memory 150, so that the data is not lost when the mobile device 100 is turned off or loses power. The PIM 168 includes functionality for organizing and managing data items of interest to the user, such as, but not limited to, e-mail, contacts, calendar events, voice mails, appointments, and task items.

The mobile device 100 may also comprise a connect module 170, and an IT policy module 172. The connect module 170 implements the communication protocols that are required for the mobile device 100 to communicate with the wireless infrastructure and any host system, such as an enterprise system, that the mobile device 100 is authorized to interface with.

The connect module 170 includes a set of APls that can be integrated with the mobile device 100 to allow the mobile device 100 to use any number of services associated with the enterprise system. The connect module 170 allows the mobile device 100 to establish an end-to-end secure, authenticated communication pipe with the host system. A subset of applications for which access is provided by the connect module 170 can be used to pass IT policy commands from the host system to the mobile device 100. This can be done in a wireless or wired manner. These instructions can then be passed to the IT policy module 172 to modify the configuration of the device 100.

Some examples of other software components 164 that may be executed by the operating system 160 may include, instant messaging application, social networking, mapping, internet browser, searching, calendar, address book and phone applications. It will be appreciated that the various applications may operate independently or may utilize features of other applications. For example, the phone application and messaging application may use the address book for contact details. The instant messaging application comprises or otherwise has access to an instant messaging (lM) message store, which is used to store instant messages and instant messaging sessions or conversations comprising one or more messages exchanged with a particular correspondent or contact. The instant messaging application comprises or otherwise has access to an lM contact list which may or may not be a subset of the contacts in the address book. The lM contact list comprises the contact with which the user of the mobile device 100 can engage in an instant messaging conversation.

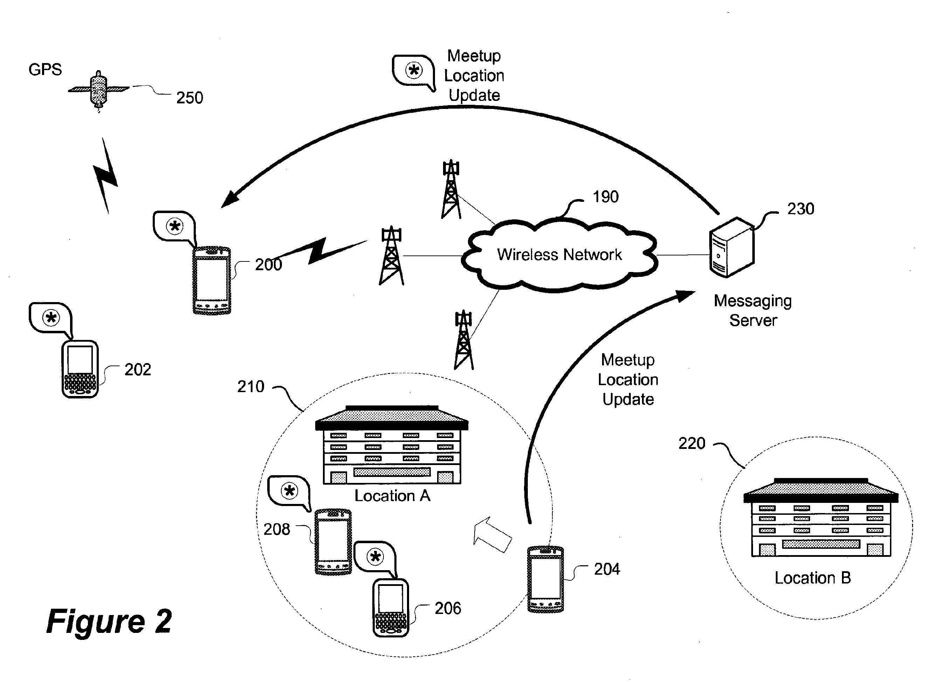

Referring to Figure 2 shows a schematic representation of an instant messaging system. In an lM application, members defined by the contact lists relate to each virtually through sending text messaging or other media content. There are occasions where physical interactions might be desirable and users may want to know when members of their social group are at designated locations. In the example presented in Figure 2, wireless mobile devices 200 to 208 are identified as members in a group in a messaging application. The wireless devices can be smart phones, tablet computer, or any wireless computing device. The group has defined meet-up locations such as location A 210 and location B 220. The location A 210, for example a coffee shop, and location B 220, for example a café, can be defined as geographic positioning coordinate or a range of coordinates defining a meeting are or meeting place. When a respective wireless mobile device enters the area of a meet-up location, for example wireless mobile device 204 arriving at Location A 210, a location update is sent to a messaging server 230 to be distributed to other members of the group. The location update may include a GPS location or a pre-defined location or meet-up identifier. The location updated may also include a group identifier or individual member identifiers for distribution of the location update. The server 230 can then determine the devices 200, 202, 206 and 208 to which meeting updates are to be distributed to. The server 230 may be coupled to other communication subsystems to determine a destination device or network to locate a respective recipient wireless mobile device. The server includes a least a processor and a memory, however the functionality of the server may be incorporated into other networking or computing devices, or may be implemented using the functionality of multiple computing devices. The server 230 can then update the status of wireless mobile device 204, on the other devices by changing the meet-up location status or icon to identify the members of the group that are currently at the location or by providing a visual or audible alert. Although only one wireless network 190 is shown, it should be appreciated that wireless mobile devices may communicate through different wireless networks couples by one or more intermediary communication networks.

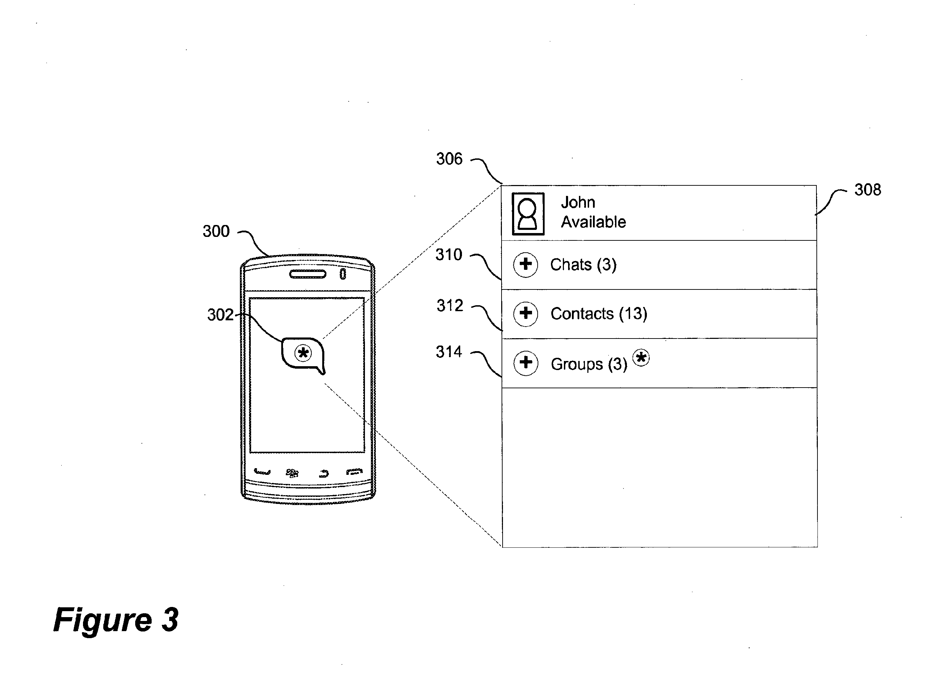

Figure 3 shows an example device screen 306 providing an instant messaging application. The device 300 provides instant messaging application 302 executed by operating system 160. The instant messaging application 302 provides can provide an example screen 306. The user status is displayed 308, with multiple options presented to the user such as identification of active chats 310, contacts available for chats 312 and defined groups 314 comprising multiple members for conducting chats. Each item may also identify the number of items available when the item is expanded and if a change has occurred to a particular item by providing a visual indicator. The screen provided is an example screen of an application, the presentation may be varied based upon the particular messaging application.

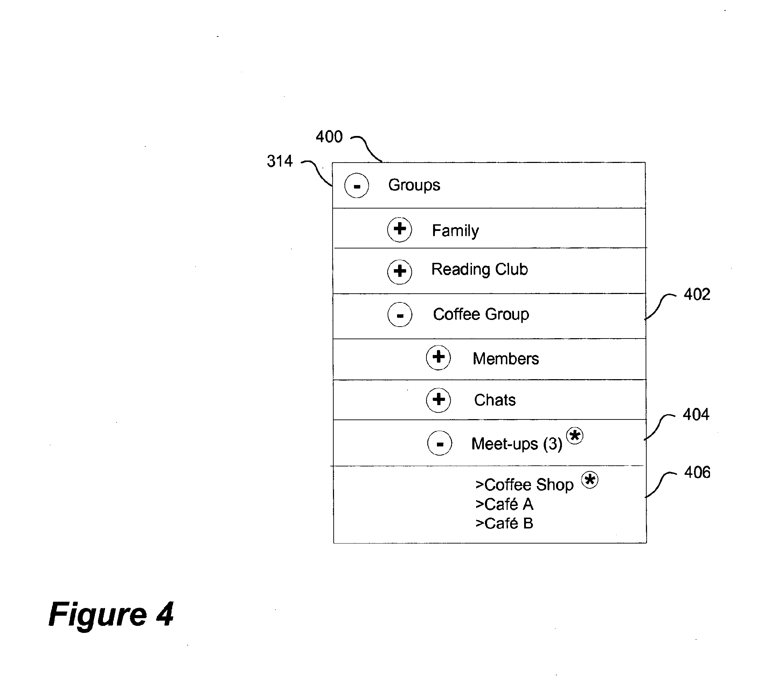

Figure 4 shows an example device screen 400 providing an instant messaging application identifying shared meet-up locations. When a Group item 314 shown in Figure 3 is expanded, the Groups screen may display Groups created or subscribed to by the user. For example, 'Family', 'Reading Club', and 'Coffee Group' 402. The 'Coffee Group' 402 can be expanded to identify the 'Members', 'Chats' active in the group, and 'Meet-up' 404 locations defined for the group. In this example three meet-up locations are defined, 'Coffee Shop' 406, 'Café A', 'Café B'. When one or more members of the group are present at a meet-up location the number of members present can be displayed in this example three members are present at the 'Coffee Shop' 406. In addition when a new member arrives at the location an indicator may be displayed, such as a 'splash' icon '(*)'.

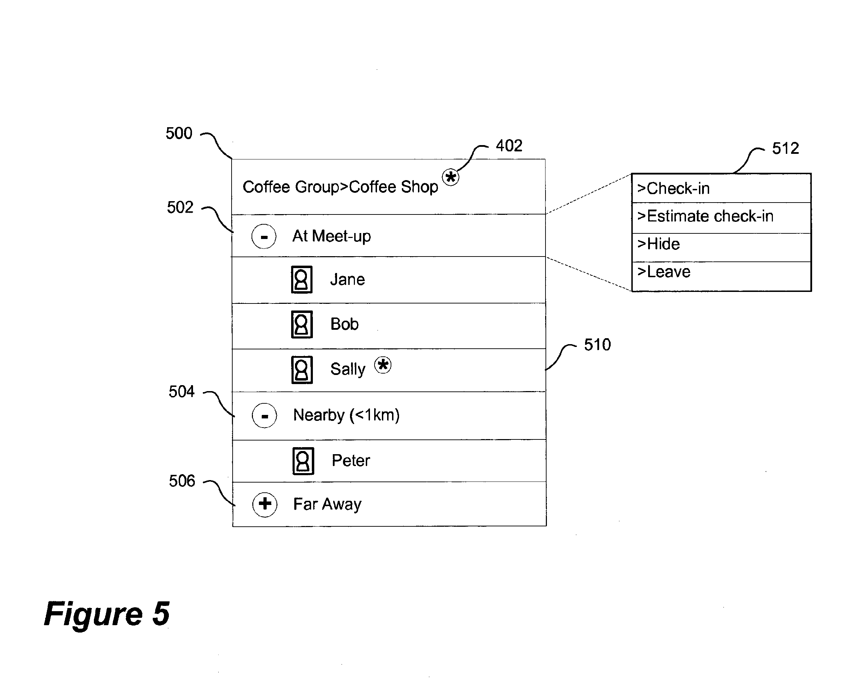

Figure 5 shows an example device screen 500 providing an instant messaging application identifying check-in status at a shared meet-up location. Although the term 'meet-up' is utilized to define a meeting point, it should be understood that any number of equivalent terms may be used. In this example the 'Coffee Shop' 402 is expanded to show the members at the meet-up location 502. When a new member arrives at the meet-up location, since the users last view of the screen, in this case 'Sally' 510 an indicator, such as a 'splash', may be identified. Alternatively a general indicator may be provided as long as someone from the group is at the meet-up location.

Additional information may be provided in respect of each member such as the length of time that the member has been at the location. Members that are within a defined proximity or tolerance may also be identified. For example members of the group that are nearby, for example '<1km', although not at the location, may be identified relative to the meet-up location. The members may also be identified with a confidence interval indicator identifying the accuracy of the GPS location information. The indicator may be a graphic indicator such as a color change, icon change or enhancement such as a range circle defining the accuracy level. Depending on the setting of the respective user device, users that are approaching the meet-up location may also provide an estimated time of arrival. The remaining group members may be identified as 'Far away' 506 or not present at the meet-up location. The messaging application may also be configured only to provide location updates when the device is within a defined range of a meet-up location such that locations of devices that are out of the range, for example '>1 km' may only be present as not at the location. Alternatively, locations updates may be periodically provided by members, irrespective of their location relative to designated meet-up locations so that a user location may be regularly available.

For the meet-up location additional options 512 may be presented to the user or are selectable by the user either within the screen, as a pop-up, or a menu item, to perform actions in respect of the meet-up location. The options may include but not be limited to a manual 'check-in' if location services are not enabled on the device, providing an 'estimated check-in' to other members if the user intends to arrive at the meet-up, and options for manually leaving or 'checking out' of the meet-up location, or selectively displaying a user status at the location to members of the group.

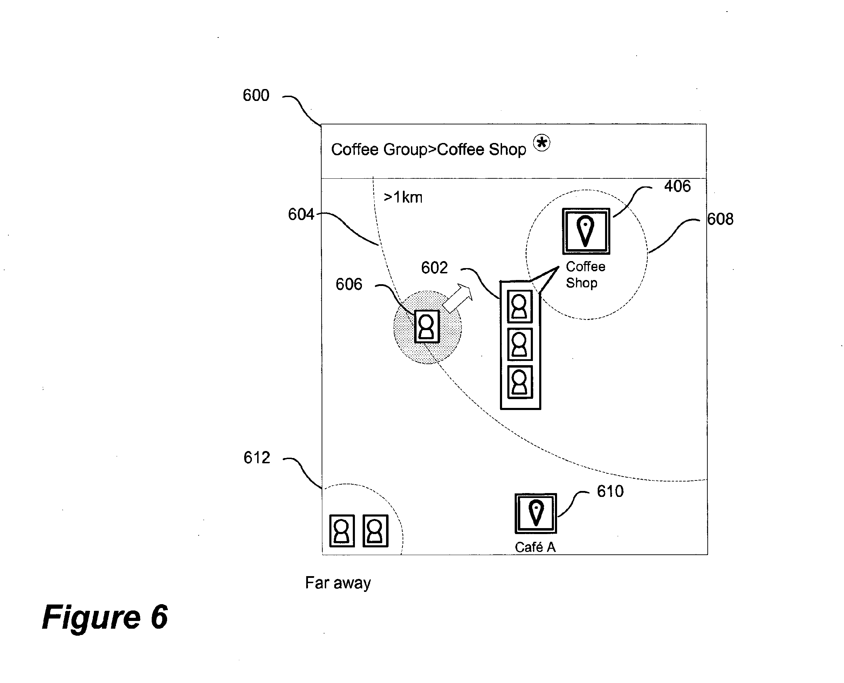

Figure 6 shows an example device screen 600 providing an instant messaging application for selecting or identifying a shared meet-up location map. A location map 600 may be alternatively provided in the application for the location identifying the meet-up location of the 'Coffee Shop' 406. A graphic indication 602 may be provided to identify the members present at the meet-up location by for example avatars or pictures associated with each member. Additional indications may be provided to identify new arrivals at the location or the period of time that the member has been at the location. Other range indicators such as a radius 608 around the meet-up may be shown to identify the area defined by the meet-up location or tolerance of the area associated with the meet-up location or a location confidence interval identifying the potential inaccuracy related to the location technology utilized. The tolerance or confidence interval may be related to the positioning limitations of one or more of the devices, for example a position resolution of <100m may not be achievable. Additional indicators a radius 604 to identify members not at the meet-up location by nearby may be identified. In this example member 606 'Peter' is with 1 km of the meet-up location or approaching the meet-up location. Additional indicators associated with a user icon may be shown to identify that the member is approaching or heading to the meet-up point, for example a direction arrow. Based upon the scale, multiple meet-up points may be shown in a single screen, such as 'Café A' 610. An indicator of the remaining group members not within the vicinity of the meet-up location 506 may also be provided. Additional map related details may be shown such as roads, terrain, buildings, satellite imagery, pictures of the building of the meet-up location. The meet-up location may be visually identified by any number of indicators to highlight and identify the location within the map. This function may also be provided in other applications such as a social networking application or mapping application as a menu item or feature.

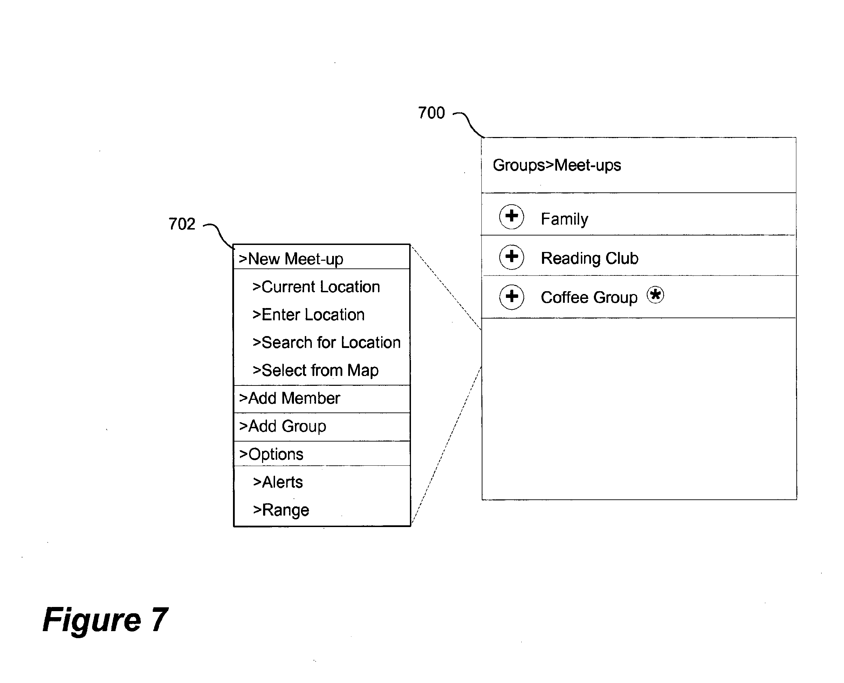

Figure 7 shows an alternative example device screen 700 providing an instant messaging application identifying shared meet-up locations. In the meet-up screen the user may be presented, either within the screen, as a pop-up, or a menu item, to perform actions at the site such as a adding a new meet-up location 702. The new meet-up location may be based upon the current location of the device as determined by GPS, a manual location entry, a search to find a location by name, or by selection from a mapping application. New members can then be added to the meet-up or a group associated with the meet-up location. Additional options may be defined for the meet-up location such as the type of alert provided when members are at the location, a range or tolerance associated with the location to determine when members are within the location, or timers associated with determining how long a member must be at a location before alerts are issued. When configuring a meet-up location, a request is sent to each of the members identifying the location and either individual member identifiers or a group identifier. In addition the options selected by the initiating party may be provided to each member. The options may be alternatively modified by each member, for example a member may not want to be alerted about a particular member's presence at the meet-up and stored locally on the device or provided to a server.

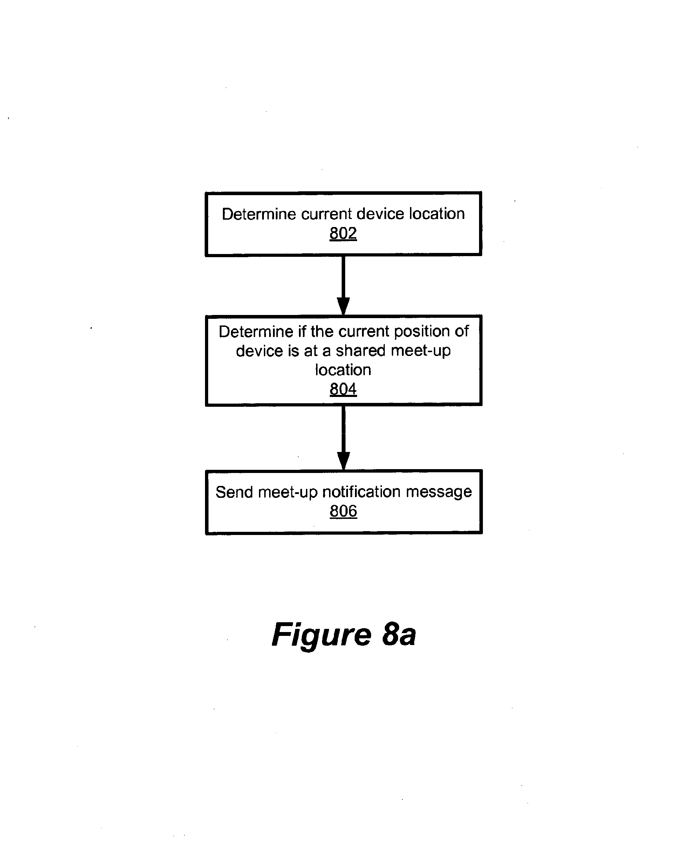

Figure 8a shows a flow diagram illustrating a shared meet-up location check-in on a wireless mobile device. Assuming one or more meet-up locations have been configured on a device, the device position is determined (802) through one or more position determination means, such as GPS, assisted GPS, and aided GPS or by network triangulation. The position determination method may be selected as the device approaches a meet-up location, where position determination that utilizes less power may be used first with lower accuracy, but higher power consumption, higher accuracy location techniques enabled as the proximity to the meet-up location increases. When it is determined that the device is at a meet-up location (804) a meet-up notification message is sent (806) via the wireless network to the messaging server for distribution to other devices or sent directly to members devices of the group.

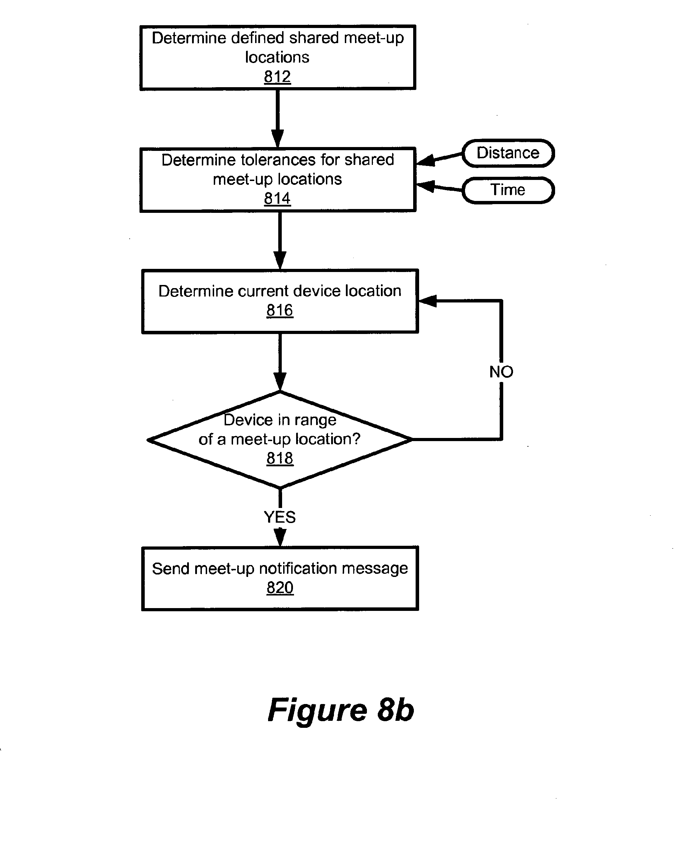

Figure 8b shows an alternative flow diagram illustrating a shared meet-up location check-in on a wireless mobile device. Assuming one or more meet-up locations have been configured on a device, the shared meet-up locations are determined at associated position coordinates defined (812). The meet-up locations may be stored in a data storage area (database) associated with the application or retrieved from another application or data storage area. Optionally tolerances or variables may be associated with the meet-up location such as a distance range associated with the location point, or lengths of time, initiating a timer, that a user must be at the meet-up point before a message is sent to other members (814). The device position is determined (816) through one or more position determination means, such as GPS, assisted GPS, and aided GPS or by network triangulation. The position determination method may be selected as the device approaches a meet-up location, where position determination that utilizes less power may be used first with lower accuracy, but higher power consumption, higher accuracy position techniques enabled as the proximity to the meet-up location increases. When it is determined that the device is within range of a meet-up location (YES at 818) a meet-up notification is sent to the messaging server for distribution to other devices (820). In a peer-to-peer instant messaging environment, notifications may be sent directly to other members without an intermediary server. The notification may be based upon a meet-up identifier, a position identifier and may also include members or groups to be notified. The server may alternatively perform a look-up to determine members and/or devices that should be notified. The notification may be sent as part of a message, a custom message format, or a data or file transfer protocol. If the device is not in range of a meet-up location (NO at 818) based on position alone or on one or more of the tolerance criteria not being met, the method continues with the device determining when the device is near a meet-up location.

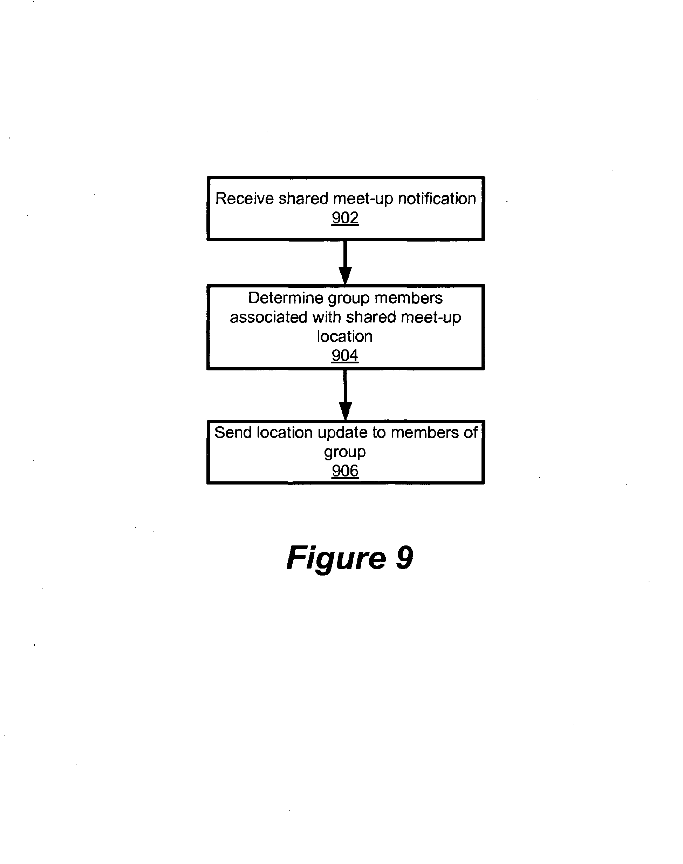

Figure 9 shows a flow diagram illustrating a shared meet-up location check-in on an instant messaging server. The server receives a meet-up notification (902) from a device coupled to a wireless network. The meet-up notification may be a location identifier or location coordinates. The group members associated with the meet-up location identifier may be determined (904) by the server either by a look-up in database associated with the server or by identifiers provided in the location notification, defining unique users, devices, or e-mail addresses. The server then sends appropriate notifications to each of members (906) or to other lM servers associated with the member. Alternatively a look up for PIN or other device identification to determine a destination device may be performed. Sending the location update may also include unique message conversion or formatting to be compliant with the destination device or application.

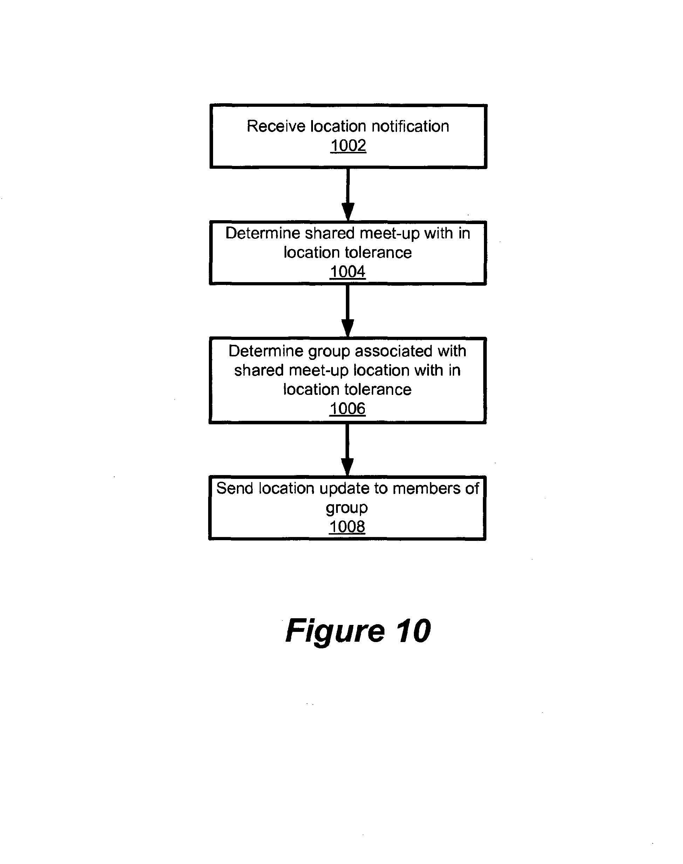

Figure 10 shows a flow diagram illustrating an alternative shared meet-up location check-in on an instant messaging server. The server receives a meet-up notification (1002) from a device coupled to a wireless network. The meet-up notification may be a location identifier or location coordinates. If the tolerance parameters are defined at the server for the meet-up location or on an individual member level, the meet-up notification may be compared to the tolerances (1004) before a notification is sent to members of the group. For example the notifications may not be sent before a defined period of time or unless the location notification is within a defined range. Alternatively, the notification may define a number of members that must be present at a location before a notification is issued, or an order in which the members are notified. The server may also dynamically determine the notification tolerances based on learning meet-up patterns and position accuracy of member devices. The group members associated with the meet-up location identifier may be determined (1006) by the server either by a look-up in database associated with the server or by identifiers provided in the location notification, defining unique users, devices, or e-mail addresses. The server then sends appropriate notifications to each of members (1008) or to other lM servers associated with the member. Alternatively a look up for PIN or other unique device identifier may be used to determine a destination device. Sending the location may also include unique message conversion or formatting to be compliant with the destination device or application.

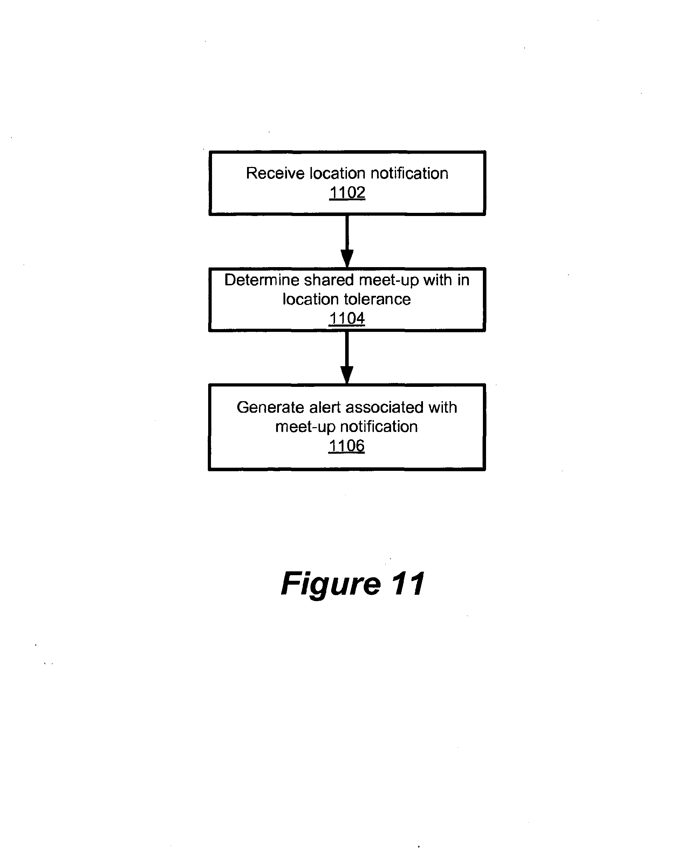

Figure 11 shows a flow diagram illustrating a shared meet-up notification being received by a member wireless mobile device. The wireless mobile device either receives a meet-up notification directly in a peer-to-peer environment or from a member device or through the messaging server (1102). The messaging application determines the associated meet-up location and the members of the group originating the notification (1104). An alert, such as a sound, vibration, or visual indication such as a 'splash' icon, graphic or other identifier are then provided (1106) in the messaging application or through a user interface application programming interface (API) for displaying in other applications capable of displaying the information. The user can then select to view the meet-up location and determine which users are present at the location.

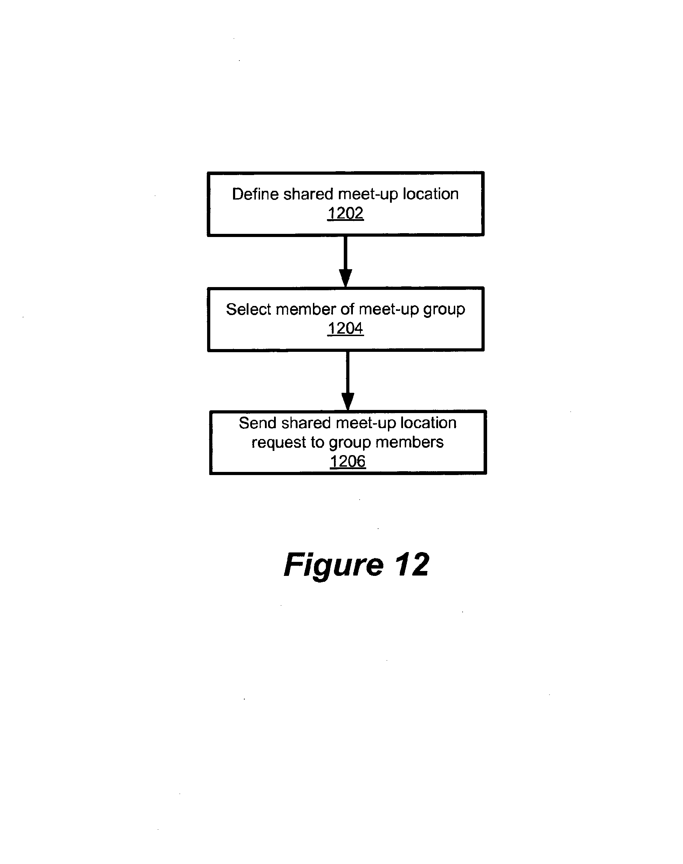

Figure 12 shows a flow diagram illustrating a shared meet-up location request generated by an application on a wireless mobile device. When defining a new meet-up location, the user can identify the meet-up location by a number of methods. For example by using a current location of a device, selecting a location from a map in the messaging application or a map application, entering location coordinates or searching for a location (1202) from which location coordinates are determined. The group and members may be selected (1204), or they may have been selected prior to the determination of the meet-up location. The device can then send the meet-up location request to the server (1206) identifying the location coordinates, a location identifier and a group or member identifier to be invited to join the group. Users may then accept or decline the invitation with appropriate messaging being sent to each device to identify the members of the group and the meet-up location. In a peer-to-peer messaging environment the request may be sent directly to each identified member.

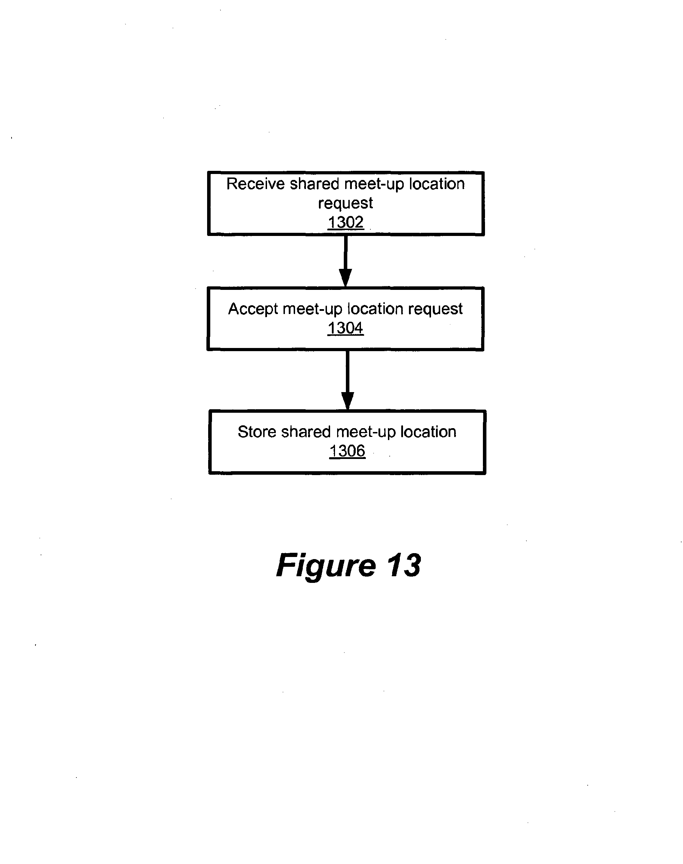

Figure 13 shows a flow diagram illustrating a shared meet-up location request acceptance in a messaging application on a wireless mobile device. When a new meet-up location is initiated by a user the meet-up location request or invitation is sent to each member of the group for acceptance. A request is received at a device and processed by a messaging application (1302). The user may be required to accept the request, or may automatically accept any meet-up location defined for a group already subscribed to (1304). The meet-up is then stored (1306) in the application or associated memory and the respect coordinates are then utilized in location determination process.

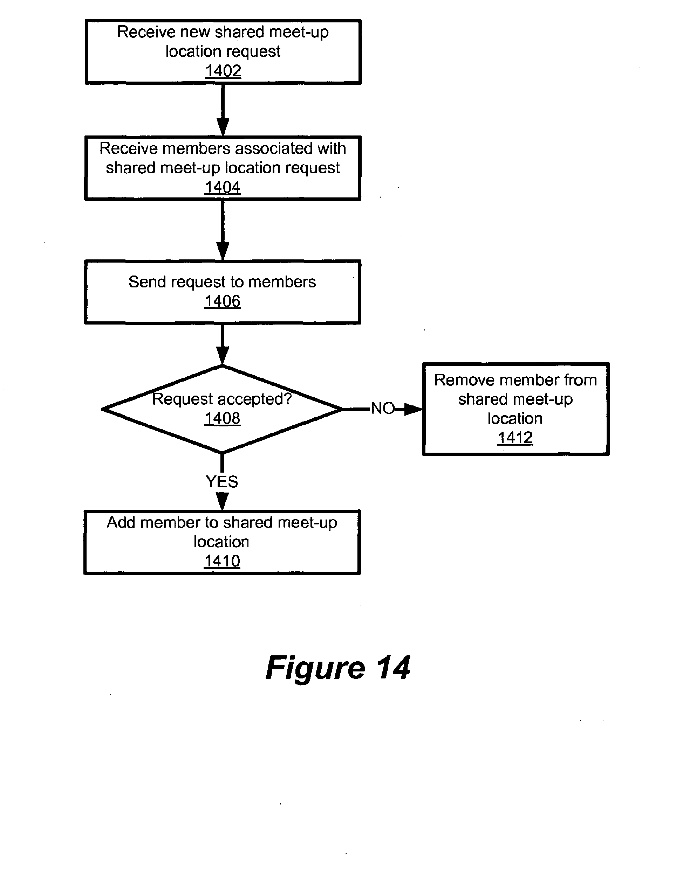

Figure 14 shows a flow diagram illustrating a shared meet-up location request processing on a messaging server. A new meet-up location request is received (1402) at the server from a wireless mobile device via a wireless network coupled directly or indirectly to the server. The request may include location coordinates that may be then associated with a unique meet-up location identifier, or a already defined location identifier. The request may also include member or group identifiers (1404). The members or group identifier may be converted to unique device identifiers by a PIN lookup, e-mail lookup, lM identifier associated with different lM messaging protocols. A location request is sent to the members (1406) including at least the location and identification of a requesting member or group. The request may also include tolerance criteria associated with the meet-up location for determining when the meet-up location notifications are to be issued, how the meet-up location is to be displayed, etc.(others?). If the request is accepted by a member (YES at 1408) the member is added to the meet-up location and the other accepted members can be notified of their acceptance (1410). If a member does not accept the request (NO at 1408) the member is removed from the meet-up location (1412), but not necessarily the group. Depending on configuration, a user may not be required to accept the meet-up location request and any new meet-up location requests may be automatically sent and added to each member of a pre-defined group.

Although portions of the present technology are described in the context of an instant message application, the technology may be integrated to provide functionality in any number of applications such as e-mail messaging, text messaging, mapping, social networking application or general operating system or user interface of the device to present information related to meet-up status, meet-up entry or invitations to a member.

This new technology has been described in terms of specific implementations and configurations which are intended to be exemplary only. Persons of ordinary skill in the art will, having read this disclosure, readily appreciate that many obvious variations, refinements and modifications may be made without departing from the inventive concept(s) disclosed herein. The scope of the exclusive right sought by the Applicant(s) is therefore intended to be limited solely by the appended claims.

## Claims

1. A method of facilitating ad-hoc congregation using an instant messaging application (306) executed by a processor on a wireless mobile device (100, 200), the method comprising:
determining (806) a current position of the wireless mobile device that is a member of a predefined group of users of the instant messaging application, the predefined group of users having at least one defined meet-up location shared with the users of the group;
determining (808) if the current position of the wireless mobile device is within a defined distance range of the shared meet-up location of the predefined group for a defined period of time; and
sending (810) a meet-up notification message via a wireless network (190) to members of the predefined group having the shared meet-up location to identify that the wireless mobile device is currently at the determined meet-up location wherein the meet-up notification message is sent when the defined period of time is exceeded.

2. The method of claim 1 wherein sending the meet-up notification message via the wireless network further comprises sending a group identifier.

3. The method of claim 2 wherein sending the meet-up notification message via the wireless network further comprises sending a meet-up location identifier and a member identifier.

4. The method of anyone of claims 1 or 3 wherein determining the current position of the wireless mobile device comprises acquiring position coordinates from a global positioning system receiver coupled to the wireless mobile device.

5. The method of anyone of claims 1 or 4 wherein determining the current position of the wireless mobile device comprises determining position coordinates by using wireless network triangulation techniques

6. The method of anyone of claims 1 to 5 wherein determining if the current position of the wireless mobile device is within the defined distance range of the shared meet-up location further comprises applying a tolerance value to positioning coordinates of the shared meet-up location, the tolerance value used to define the distance range of positioning coordinates which apply to the shared meet-up location.

7. The method of anyone of claims 1 to 6 wherein meet-up notification messages sent via the network are sent to a messaging server, wherein the server maintains group membership information and distributes messaging to the appropriate device.

8. The method of anyone of claims 1 to 7 further comprising:
receiving, via the wireless network, an incoming meet-up notification message identifying a shared meet-up location and a member identifier;
displaying an indication on a display of the wireless mobile device of the received incoming shared meet-up notification message, the indication identifying the presence of a member associated with member indentifer at the meet-up location.

9. The method of anyone of claims 1 to 8 further comprising:
associating location coordinates with a new shared meet-up location identifier;
associating group of members with the new shared meet-up location identifier; and
sending via the wireless network the new shared meet-up location coordinates and a meet-up location identifier.

10. The method of claim 9 further comprising receiving one or more tolerance parameter associated with the new shared meet-up location wherein the tolerance parameters are sent to the messaging server.

11. The method of claim 10 wherein the tolerance parameters are selected from the group comprising: a period of time; a distance range or tolerance; a time of day; and a date.

12. The method of anyone of claims 1 to 11 wherein sending the meet-up notification message through the wireless network to identify that the wireless device is at the determined shared meet-up location are sent directly to one or more member wireless mobile devices via the wireless network or one or more communications networks coupled to the wireless network.

13. A wireless mobile device (100) comprising:
a positioning device (180) for determining the geographical coordinates of the wireless mobile device;
a wireless transceiver (112, 114) for communicating with a wireless network;
a memory (150, 152) containing instructions for facilitating ad-hoc congregation using an instant messaging application executed by a processor on the wireless mobile device;
a processor (110) coupled to the positioning device, wireless transceiver and the memory, the processor executing an application executing the method of claim 1 to 12.

14. A computer readable memory containing instructions for facilitating ad-hoc congregation using an instant messaging application executed by a processor on a wireless mobile device, the instructions when executed by the processor implementing the method of claim 1 to 12.

## Patentansprüche

1. Ein Verfahren zur Erleichterung einer Ad-hoc-Versammlung unter Verwendung einer Instant-Messaging- bzw. Sofortnachrichten-Anwendung (306), die von einem Prozessor auf einer drahtlosen mobilen Vorrichtung (100, 200) ausgeführt wird, wobei das Verfahren aufweist:
Bestimmen (806) einer aktuellen Position der drahtlosen mobilen Vorrichtung, die ein Mitglied einer vordefinierten Gruppe von Benutzern der Instant-Messaging-Anwendung ist, wobei die vordefinierte Gruppe von Benutzern zumindest einen definierten Treffpunkt hat, der mit den Benutzern der Gruppe geteilt bzw. gemeinsam benutzt wird;
Bestimmen (808), ob die aktuelle Position der drahtlosen mobilen Vorrichtung innerhalb eines definierten Entfernungsbereichs des gemeinsamen Treffpunkts der vordefinierten Gruppe für eine definierte Zeitdauer ist; und
Senden (810) einer Treffen-Benachrichtigungsnachricht über ein drahtloses Netzwerk (190) an Mitglieder der vordefinierten Gruppe mit dem vordefinierten Treffpunkt, um zu identifizieren, dass die drahtlose mobile Vorrichtung aktuell an dem bestimmten Treffpunkt ist, wobei die Treffen-Benachrichtigungsnachricht gesendet wird, wenn die definierte Zeitdauer überschritten wird.

2. Das Verfahren gemäß Anspruch 1, wobei das Senden der Treffen-Benachrichtigungsnachricht über das drahtlose Netzwerk weiter ein Senden eines Gruppenidentifizierers aufweist.

3. Das Verfahren gemäß Anspruch 2, wobei das Senden der Treffen-Benachrichtigungsnachricht über das drahtlose Netzwerk weiter ein Senden eines Treffpunkt-Identifizierers und eines Mitglied-Identifizierers aufweist.

4. Das Verfahren gemäß einem der Ansprüche 1 oder 3, wobei das Bestimmen der aktuellen Position der drahtlosen mobilen Vorrichtung aufweist ein Akquirieren von Positionskoordinaten von einem Empfänger eines globalen Positionierungssystems, der mit der drahtlosen mobilen Vorrichtung gekoppelt ist.

5. Das Verfahren gemäß einem der Ansprüche 1 oder 4, wobei das Bestimmen der aktuellen Position der drahtlosen mobilen Vorrichtung ein Bestimmen von Positionskoordinaten unter Verwendung von Drahtlosnetzwerk-Triangulationsverfahren aufweist.

6. Das Verfahren gemäß einem der Ansprüche 1 bis 5, wobei das Bestimmen, ob die aktuelle Position der drahtlosen mobilen Vorrichtung innerhalb des definierten Entfernungsbereichs des gemeinsamen Treffpunkts ist, weiter aufweist ein Anwenden eines Toleranzwerts auf Positionskoordinaten des gemeinsamen Treffpunkts, wobei der Toleranzwert verwendet wird zum Definieren des Entfernungsbereichs von Positionskoordinaten, die für den gemeinsamen Treffpunkt gelten.

7. Das Verfahren gemäß einem der Ansprüche 1 bis 6, wobei über das Netzwerk gesendete Treffen-Benachrichtigungsnachrichten an einen Nachrichten- bzw. Messaging-Server gesendet werden, wobei der Server eine Gruppenmitgliedschaftsinformation führt und Messaging an die geeignete Vorrichtung verteilt.

8. Das Verfahren gemäß einem der Ansprüche 1 bis 7, das weiter aufweist:
Empfangen, über das drahtlose Netzwerk, einer eingehenden Treffen-Benachrichtigungsnachricht, die einen gemeinsamen Treffpunkt und einen Mitgliedsidentifizierer identifiziert;
Anzeigen, auf einer Anzeige der drahtlosen mobilen Vorrichtung, einer Angabe der empfangenen, eingehenden "gemeinsamer Treffpunkt"-Benachrichtigungsnachricht, wobei die Angabe das Vorhandensein eines Mitglieds, das mit dem Mitgliedsidentifizierer assoziiert ist, an dem Treffpunkt identifiziert.

9. Das Verfahren gemäß einem der Ansprüche 1 bis 8, das weiter aufweist:
Assoziieren von Positionskoordinaten mit einem "neuer gemeinsamer Treffpunkt"-Identifizierer;
Assoziieren einer Gruppe von Mitgliedern mit dem "neuer gemeinsamer Treffpunkt"-Identifizierer; und
Senden der Koordinaten des neuen gemeinsamen Treffpunkts und eines Treffpunkt-Identifizierers über das drahtlose Netzwerk.

10. Das Verfahren gemäß Anspruch 9, das weiter aufweist ein Empfangen eines oder mehrerer Toleranzparameter(s), der/die mit dem neuen gemeinsamen Treffpunkt assoziiert ist/sind, wobei die Toleranzparameter an den Nachrichten-Server gesendet werden.

11. Das Verfahren gemäß Anspruch 10, wobei die Toleranzparameter aus der Gruppe ausgewählt werden, die aufweist: eine Zeitdauer; einen Entfernungsbereich oder Toleranz; eine Uhrzeit; und ein Datum.

12. Das Verfahren gemäß einem der Ansprüche 1 bis 11, wobei das Senden der Treffen-Benachrichtigungsnachricht über das drahtlose Netzwerk, um zu identifizieren, dass die drahtlose Vorrichtung an dem bestimmten gemeinsamen Treffpunkt ist, direkt an eine oder mehrere drahtlose mobile Mitglied-Vorrichtungen über das drahtlose Netzwerk oder ein oder mehrere Kommunikationsnetzwerk(e), das/die mit dem drahtlosen Netzwerk gekoppelt ist/sind, gesendet wird.

13. Eine drahtlose mobile Vorrichtung (100), die aufweist:
eine Positionierungsvorrichtung (180) zum Bestimmen der geographischen Koordinaten der drahtlosen mobilen Vorrichtung;
einen drahtlosen Transceiver (112, 114) zum Kommunizieren mit einem drahtlosen Netzwerk;
einen Speicher (150, 152), der Anweisungen enthält zur Erleichterung einer Ad-hoc-Versammlung unter Verwendung einer Instant-Messaging-bzw. Sofortnachrichten-Anwendung, die von einem Prozessor auf der drahtlosen mobilen Vorrichtung ausgeführt wird;
einen Prozessor (110) der mit der Positionierungsvorrichtung, dem drahtlosen Transceiver und dem Speicher gekoppelt ist, wobei der Prozessor eine Anwendung ausführt, die das Verfahren gemäß Anspruch 1 bis 12 ausführt.

14. Ein computerlesbarer Speicher, der Anweisungen enthält zur Erleichterung einer Ad-hoc-Versammlung unter Verwendung einer Instant-Messaging-Anwendung, die von einem Prozessor auf einer drahtlosen mobilen Vorrichtung ausgeführt wird, wobei die Anweisungen bei Ausführung durch den Prozessor das Verfahren gemäß Anspruch 1 bis 12 implementieren.

## Revendications

1. Procédé de facilitation d'une congrégation ad hoc utilisant une application de messagerie instantanée (306) exécutée par un processeur sur un dispositif mobile sans fil (100, 200), le procédé consistant à :
déterminer (806) une position en cours du dispositif mobile sans fil, lequel est un membre d'un groupe d'utilisateurs prédéfini de l'application de messagerie instantanée, le groupe d'utilisateurs prédéfini présentant au moins un emplacement de rencontre défini partagé avec les utilisateurs du groupe ;
déterminer (808) si la position en cours du dispositif mobile sans fil se situe dans une plage de distance définie de l'emplacement de rencontre partagé du groupe prédéfini pour une période de temps définie ; et
envoyer (810) un message de notification de rencontre, par l'intermédiaire d'un réseau sans fil (190), aux membres du groupe prédéfini présentant l'emplacement de rencontre partagé, en vue de d'identifier que le dispositif mobile sans fil est à cet instant à l'emplacement de rencontre déterminé, le message de notification de rencontre étant envoyé lorsque la période de temps définie est dépassée.

2. Procédé selon la revendication 1, dans lequel l'envoi du message de notification de rencontre, par l'intermédiaire du réseau sans fil, consiste en outre à envoyer un identifiant de groupe.

3. Procédé selon la revendication 2, dans lequel l'envoi du message de notification de rencontre, par l'intermédiaire du réseau sans fil, consiste en outre à envoyer un identifiant d'emplacement de rencontre et un identifiant de membre.

4. Procédé selon l'une quelconque des revendications 1 ou 3, dans lequel la détermination de la position en cours du dispositif mobile sans fil consiste à acquérir des coordonnées de position auprès d'un récepteur de système mondial de localisation couplé au dispositif mobile sans fil.

5. Procédé selon l'une quelconque des revendications 1 ou 4, dans lequel la détermination de la position en cours du dispositif mobile sans fil consiste à déterminer des coordonnées de position en utilisant des techniques de triangulation de réseau sans fil.

6. Procédé selon l'une quelconque des revendications 1 à 5, dans lequel la détermination du fait que la position en cours du dispositif mobile sans fil est dans la plage de distance définie de l'emplacement de rencontre partagé consiste en outre à appliquer une valeur de tolérance à des coordonnées de positionnement de l'emplacement de rencontre partagé, la valeur de tolérance étant utilisée en vue de définir la plage de distance des coordonnées de positionnement qui s'appliquent à l'emplacement de rencontre partagé.

7. Procédé selon l'une quelconque des revendications 1 à 6, dans lequel les messages de notification de rencontre envoyés par le biais du réseau sont envoyés à un serveur de messagerie, le serveur maintenant des informations d'adhésion à un groupe et distribuant des messages au dispositif pertinent.

8. Procédé selon l'une quelconque des revendications 1 à 7, consistant en outre à :
recevoir, par le biais du réseau sans fil, un message de notification de rencontre entrant identifiant un emplacement de rencontre partagé et un identifiant de membre ;
afficher une indication, sur un écran d'affichage du dispositif mobile sans fil, du message de notification de rencontre partagée entrant reçu, l'indication identifiant la présence d'un membre associé à un identifiant de membre à l'emplacement de rencontre.

9. Procédé selon l'une quelconque des revendications 1 à 8, consistant en outre à :
associer des coordonnées de localisation à un nouvel identifiant d'emplacement de rencontre partagé ;
associer un groupe de membres au nouvel identifiant d'emplacement de rencontre partagé ; et
envoyer, par le biais du réseau sans fil, les coordonnées du nouvel emplacement de rencontre partagé et un identifiant d'emplacement de rencontre.

10. Procédé selon la revendication 9, consistant en outre à recevoir un ou plusieurs paramètres de tolérance associés au nouvel emplacement de rencontre partagé, les paramètres de tolérance étant envoyés au serveur de messagerie.

11. Procédé selon la revendication 10, dans lequel les paramètres de tolérance sont sélectionnés dans le groupe comportant : une période de temps, une tolérance ou plage de distance ; une heure du jour et une date.

12. Procédé selon l'une quelconque des revendications 1 à 11, dans lequel l'envoi du message de notification de rencontre à travers le réseau sans fil, en vue d'identifier que le dispositif sans fil se situe à l'emplacement de rencontre déterminé partagé, est mis en oeuvre par un envoi direct à un ou plusieurs dispositifs mobiles sans fil membres, par le biais du réseau sans fil ou d'un ou plusieurs réseaux de communication couplés au réseau sans fil.

13. Dispositif mobile sans fil (100) comprenant :
un dispositif de positionnement (180) destiné à déterminer les coordonnées géographiques du dispositif mobile sans fil ;
un émetteur-récepteur sans fil (112, 114) destiné à communiquer avec un réseau sans fil ;
une mémoire (150, 152) contenant des instructions pour faciliter une congrégation ad hoc au moyen d'une application de messagerie instantanée exécutée par un processeur sur le dispositif mobile sans fil ;
un processeur (110) couplé au dispositif de positionnement, à l'émetteur-récepteur sans fil et à la mémoire, le processeur exécutant une application mettant en oeuvre le procédé selon les revendications 1 à 12.

14. Mémoire lisible par ordinateur contenant des instructions destinées à faciliter une congrégation ad hoc au moyen d'une application de messagerie instantanée exécutée par un processeur sur un dispositif mobile sans fil, les instructions, lorsqu'elles sont exécutées par le processeur, mettant en oeuvre le procédé selon les revendications 1 à 12.
